# EUROPÄISCHE PATENTSCHRIFT

(11) **EP 1 601 492 B1**
(45) Veröffentlichungstag und Bekanntmachung des Hinweises auf die Patenterteilung: **21.01.2009**
(21) Anmeldenummer: 03789387.2
(22) Anmeldetag: 23.12.2003
(51) Int. Cl.: B23P 21/00, B62D 65/00, B23K 37/047

(54) **FERTIGUNGSANLAGE FÜR BAUTEILE, INSBESONDERE KAROSSERIEBAUTEILE**
MANUFACTURING PLANT FOR PARTS, PARTICULARLY VEHICLE BODY PARTS
INSTALLATION DE PRODUCTION DE COMPOSANTS, EN PARTICULIER DE COMPOSANTS DE CARROSSERIE

(30) Priorität: 12.03.2003 DE 20304022 U
(43) Veröffentlichungstag der Anmeldung: 07.12.2005
(73) Patentinhaber: KUKA Systems GmbH, 86165 Augsburg (DE)
(72) Erfinder: DEGAIN, Michael, Grand Blanc, MI 48439 (US); LONG, Robert, Shelby Twp., MI 48316 (US); MOSER, Hans, 86405 Erlingen (DE)
(74) Vertreter: Ernicke, Hans-Dieter
(86) Internationale Anmeldenummer: PCT/EP2003/014766
(87) Internationale Veröffentlichungsnummer: WO 2004/080645

(56) Entgegenhaltungen:
- DE-A- 4 422 380
- DE-A- 19 713 860
- GB-A- 2 145 642
- US-A1- 2002 072 825
- US-B1- 6 336 582

## Beschreibung

Die Erfindung betrifft eine Fertigungsanlage für Bauteile, insbesondere Karosseriebauteile.

Die US 6,336,582 B1 offenbart eine Fertigungsanlage für Karosseriebauteile mit mehreren Bearbeitungsstationen und mehreren mehrachsigen Robotern. Die Fertigungsanlage beinhaltet eine Fügestation oder sogenannte combiningstation und hieran anschließende Ausschweißstationen, die entlang einer Transferlinie hintereinander angeordnet sind. Verschiedene Karosseriebauteile W1 bis W4, nämlich ein Frontteil, ein Frontbodenteil, ein Heckbodenteil und eine Rückwand werden an anderen Stellen produziert und der Fügestation zugeführt, wo sie in der vorgesehenen Zuordnung hintereinander auf einer gemeinsamen Spannvorrichtung abgelegt und aufgenommen werden. Die Karosseriebauteile W1 bis W4 sind durch ihre Gestaltung untereinander ungleichartig, wobei sie zu einem gemeinsamen Fahrzeugtyp gehören. Die Haltevorrichtung ist multifunktional ausgebildet oder besitzt verstellbare Spannwerkzeuge, so dass sie auf andere Ausführungen von Karosseriebauteilen W1 bis W4, die zu einem anderen Fahrzeugtyp gehören, umgerüstet werden kann. Die Fügestation hat eine einzelne Aufnahmevorrichtung und nur eine dortige Arbeitsstelle, an der die zugeordneten Karosseriebauteile W1 bis W4 von beidseits auf Fahrachsen angeordneten Schweißrobotern geschweißt und zu einer Bodengruppe verbunden werden. Vor der anschließenden Ausschweißlinie ist eine Ladestelle angeordnet, zu der die Bodengruppe mittels mehrerer Transportroboter transportiert und dort auf einen schienengeführten Transportwagen für ihren Weitertransport durch die Ausschweißlinie abgesetzt wird. Für diesen Bodengruppentransport werden Schweißroboter aus der Fügestation verwendet, die eine Doppelfunktion als Schweiß- und Transportroboter haben und beidseits der Fügestation und der Ladestelle auf einer Fahrachse in Transferrichtung sich bewegen können. Diese Fahrachsen enden vor der ersten Bearbeitungsstation der anschließenden Ausschweißlinie. In den Bearbeitungsstationen der Ausschweißlinie sind die Schweißroboter stationär angeordnet. In der vorbekannten Fertigungsanlage kann zu einem gewissen Zeitpunkt nur ein Typ von Karosseriebauteilen aufgenommen und bearbeitet werden. Dies beschränkt die Flexibilität der Fertigungsanlage.

Eine andere Fertigungsanlage ist aus der DE 298 04 850 U1 bekannt. Sie besteht aus mehreren Bearbeitungsstationen oder Zellen, die entlang einer Transferlinie hintereinander aufgereiht sind. Innerhalb jeder Zelle ist ein zentraler Transportroboter vorhanden, der als stationär positionierter mehrachsiger Gelenkarmroboter ausgebildet ist und die Bauteile transportiert. Innerhalb der Zelle gibt es mehrere Arbeitsstellen, an denen die Bauteile von Bearbeitungsrobotern bearbeitet, insbesondere gefügt werden. Die Bauteilübergabe zwischen den Zellen erfolgt über Zwischenablagen an den gemeinsamen Zellgrenzen. In derartigen Zellen werden relativ viele Roboter benötigt, die zudem nicht optimal ausgelastet sind.

Es ist Aufgabe der vorliegenden Erfindung, eine bessere Fertigungsanlage aufzuzeigen.

Die Erfindung löst diese Aufgabe mit den Merkmalen im Hauptanspruch. Die Anordnung von ein oder mehreren Handlingsrobotern auf zusätzlichen Fahrachsen erweitert den Arbeitsbereich und verbessert die Bedienung sowie Erreichbarkeit von Arbeitsstellen, die mehrfach innerhalb einer Bearbeitungsstation angeordnet sind. Dies ist vor allem für eine flexible Fertigungsanlage von Vorteil, in der unterschiedliche Typen von Bauteilen im vorzugsweise freien Mix bearbeitet werden, wobei die Arbeitsstellen typbezogen sind. Trotz Vergrößerung des Roboterarbeitsbereichs und der Arbeitsstellenzahl kann die Anzahl der erforderlichen Handlingroboter klein gehalten werden.

Von besonderem Vorteil ist es, wenn Handling- und Bearbeitungsroboter nebeneinander auf einer gemeinsamen Fahrachse angeordnet sind. Hierdurch können Bearbeitungs- und Handlingvorgänge, insbesondere Transportvorgänge, gleichzeitig ablaufen, wobei zudem mehrere Bauteile gleichzeitig bearbeitet und/oder gehandhabt werden können. Durch die gemeinsame Fahrachse kann hierbei die Zahl der insgesamt erforderlichen Roboter wiederum klein gehalten werden. Ein oder mehrere Roboter können auch eine Doppelfunktion als Handling- und Bearbeitungsroboter haben.

Die Bearbeitungsstationen können getrennt voneinander angeordnet sein, wobei Übergabestellen mit Zwischenablagen, Pufferspeichern oder dgl. in der Transferlinie gebildet werden. Die Transferlinie kann sich außerdem verzweigen, was eine bessere Auslastung der einzelnen Bearbeitungsstationen ermöglicht. Hierdurch können außerdem die Taktzeitvorgaben und der Materialschluss flexibilisiert werden.

Ein oder mehrere gemeinsame Fahrachsen sind durch mehrere aneinander grenzende Bearbeitungsstationen verlegt, wodurch ein fließender Stationsübergang geschaffen wird. Eine solche Bauweise hat zudem Vorteile bei einer hohen Flexibilisierung der Fertigungsanlage. Der Bauaufwand und die Übergabezeiten zwischen den einzelnen Stationen werden optimiert.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Draufsicht auf eine Fertigungsanlage mit mehreren entlang einer Transferlinie hintereinander angeordneten Bearbeitungsstationen und
- Figur 2 bis 4:: vergrößerte und abgebrochene Ausschnitte einzelner Bearbeitungsstationen aus der Fertigungsanlage von Figur 1.

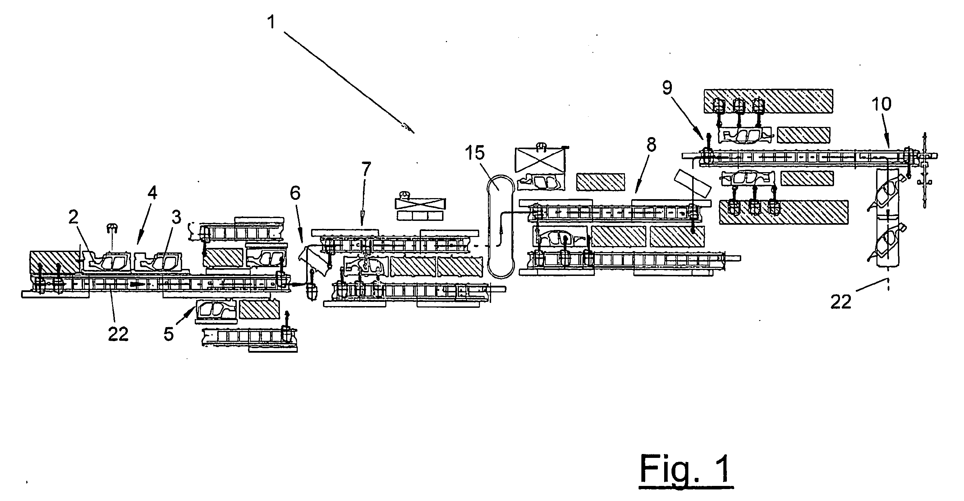

Figur 1 zeigt in der Draufsicht schematisch eine Fertigungsanlage (1) für Bauteile (2,3), bei denen es sich vorzugsweise um Karosserieteile von Fahrzeugkarosserien, insbesondere um Rohbauteile handelt. Dies können z.B. die dargestellten Seitenwände einer Fahrzeugkarosserie sein. In der Fertigungsanlage (1) werden mehrere unterschiedliche Typen gleichartiger Bauteile (2,3) nebeneinander und im vorzugsweise freien Mix bearbeitet. In der gezeigten Ausführungsform sind zwei unterschiedliche Bauteiltypen (2,3) dargestellt. Hierbei sind Vorkehrungen getroffen, um auch drei oder vier oder eine beliebige andere Zahl von Bauteiltypen bearbeiten zu können.

Die Fertigungsanlage (1) besteht aus mehreren Bearbeitungsstationen (4 bis 10), die entlang einer Transferlinie (22) hintereinander angeordnet sind. Die Bauteile (2,3) werden in den einzelnen Stationen (4 bis 10) bearbeitet und dann stationsweise weitergereicht. Die Transferlinie (22) kann eine beliebige Form und Erstreckung haben. Sie kann zumindest bereichsweise geradlinig ausgebildet sein, wobei mehrere Bearbeitungsstationen, z.B. die Stationen (4,5) in einer fluchtenden Linie direkt hintereinander angeordnet sind. Die Transferlinie (22) kann alternativ auch Knickstellen haben, wobei z.B. zwischen den Stationen (5,6,7) Übergabestellen (13) mit einer Änderung der Förderrichtung entstehen. Abweichend vom gezeigten einfachen Ausführungsbeispiel ist es ferner möglich, dass die Transferlinie (22) sich stellenweise verzweigt. Hierdurch können z.B. zwei oder mehr Bearbeitungsstationen parallel nebeneinander angeordnet und abwechselnd aus der Transferlinie gespeist werden. Eine solche Gestaltung bietet sich z.B. bei taktzeitintensiven Stationen an, bei denen die Bearbeitung länger dauert als in den anderen Stationen. Nach der Verzweigung kann die Transferlinie (22) wieder zu einer Linie vereint werden. In weiterer Abwandlung sind auch mehrere parallele Transferlinien (22) möglich.

In den Bearbeitungsstationen (4 bis 10) sind jeweils mehrere Roboter (18,19) angeordnet, bei denen es sich vorzugsweise um mehrachsige Gelenkarmroboter, insbesondere um sechsachsige Industrieroboter handelt. Zumindest ein Teil der Roboter (18,19) sind auf einer zusätzlichen Fahrachse (20,21) angeordnet und können sich auf dieser durch die einzelnen Bearbeitungsstationen (4,5,7,8,9) bewegen. Zumindest stellenweise sind auf einer Fahrachse (20,21) mehrere Roboter (18,19) nebeneinander angeordnet.

Die Roboter (18,19) können zugewiesene Aufgabenbereiche haben. Hierbei handelt es sich einerseits um Handlingroboter (18), die Transport- und Handhabungsaufgaben wahrnehmen. Andererseits sind Bearbeitungsroboter (19) vorhanden, die beliebige Bauteilbearbeitungen durchführen, z.B. Fügearbeiten. Ein Großteil der Roboter (19) sind beispielsweise Schweißroboter. Ein oder mehrere Roboter (18,19) können Wechselkupplungen an der Roboterhand aufweisen, um bei Bedarf Werkzeuge wechseln zu können. Ein Handlingroboter (18) kann hierbei durch Werkzeugwechsel auch Bearbeitungsaufgaben an den Bauteilen (2,3) durchführen. Die Roboter (18,19) können durch eine solche Doppelfunktion von Handhaben und Bearbeiten besser ausgelastet werden und einen wirtschaftlichen Mehrwert bieten.

In verschiedenen Bearbeitungsstationen (4,5,7,8,9) ist eine typbezogene Bearbeitung der unterschiedlichen Bauteile (2,3) möglich. Zu diesem Zweck sind in diesen Bearbeitungsstationen (4,5,7,8,9) mehrere typbezogene Arbeitsstellen (11,12) vorhanden, die z.B. als typbezogene Bauteilauflagen mit speziellen Spannvorrichtungen ausgebildet sind. Diese Arbeitsstellen (11,12) sind entlang der Fahrachsen (20,21) angeordnet und können von den Robotern (18,19) gemeinsam bedient werden.

In ein oder mehreren Bearbeitungsstationen (4,5,7,8,9) ist jeweils mindestens eine gemeinsame Fahrachse (20) angeordnet, auf der jeweils ein oder mehrere Handlingroboter (18) und ein oder mehrere Bearbeitungsroboter (19) nebeneinander angeordnet sind. Die Arbeitsstellen (11,12) sind entlang dieser gemeinsamen Fahrachse (20) angeordnet, so dass alle Roboter (18,19) sämtliche Arbeitsstellen (11,12) erreichen können. Die gemeinsame Fahrachse (20) verläuft vorzugsweise entlang der Transferlinie (22).

In einer oder mehreren Bearbeitungsstationen (4,5,7,8,9) sind ferner ein oder mehrere weitere Fahrachsen (21) vorhanden, die sich parallel zur genannten gemeinsamen Fahrachse (20) erstrecken und auf denen ein oder mehrere Roboter, vorzugsweise Bearbeitungsroboter (19), beweglich gelagert sind.

Die Fahrachsen (20,21) können in beliebig geeigneter Weise ausgebildet sein. In der gezeigten Ausführungsform handelt es sich um Fahrschienen, welche die siebte Roboterachse bilden. Die Roboter (18,19) haben hierfür entsprechende Fahrwerke. Zudem sind geeignete Positioniereinrichtungen vorhanden, um die Roboter an den Arbeitsstellen (11,12) exakt positionieren zu können.

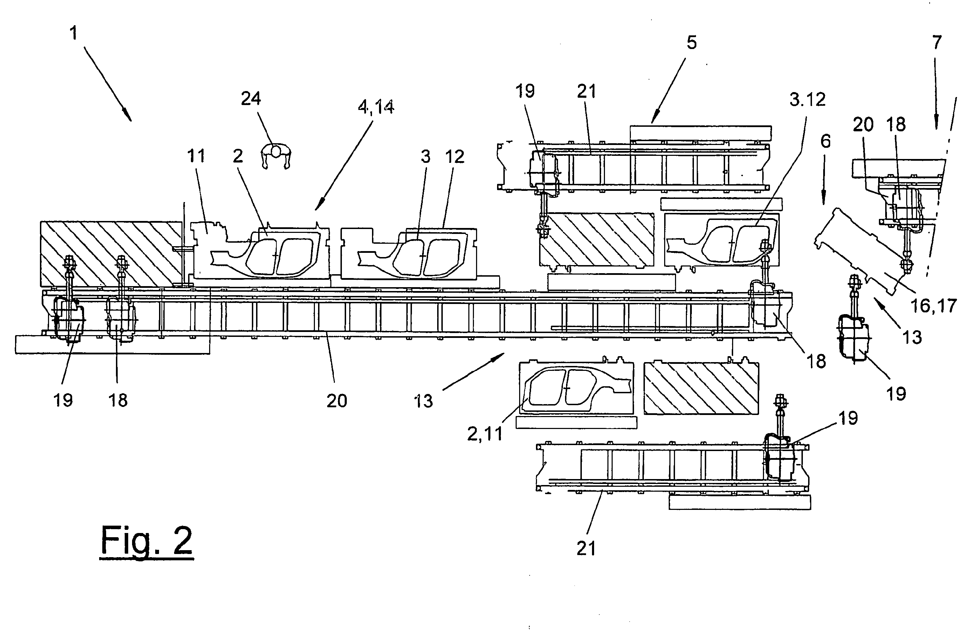

Figur 2 zeigt in der Draufsicht den Eingangsbereich der Fertigungsanlage (1). Die erste Bearbeitungsstation (4) ist als Ladestation mit mehreren Arbeitsstellen (11,12) ausgebildet, welche in diesem Fall als Ladestellen (14) gestaltet sind. Hier können die unterschiedlichen Bauteiltypen (2,3) von ein oder mehreren Werkern (24) manuell auf geeignete Geometrie bestimmende Aufnahmen gelegt und gespannt werden. An den Ladestellen (14) bzw. Arbeitsstellen (11,12) können hierbei geeignete Sicherheitsvorrichtungen für den Werker (24), z.B. Trittschaltmatten vorhanden sein, die bei einem Betreten ein entsprechendes Signal an die Roboter- und Anlagensteuerung abgeben und während der manuellen Einlegetätigkeit des Werkers (24) den Roboterbetrieb unterbrechen.

Die gemeinsame Fahrachse (20) ist entlang der Arbeitsstellen (11,12) verlegt. Auf der gemeinsamen Fahrachse (20) bewegen sich ein Handlingroboter (18) und ein Bearbeitungsroboter (19), beispielsweise ein Schweißroboter, nebeneinander. Der Schweißroboter (19) führt an den Ladestellen (14) die ersten Schweißarbeiten an den manuell eingelegten Bauteilen (2,3) durch. Der Handlingroboter (18) übernimmt nach Beendigung der Bearbeitung die Bauteile (2,3) und transportiert sie weiter in die nächstfolgende Bearbeitungsstation (5), die als sogenannte Respotstation zum weiteren Ausschweißen der zunächst gehefteten Bauteile (2,3) ausgebildet ist.

Die Bearbeitungsstationen (4,5) haben in diesem Fall eine gemeinsame, stationsübergreifende und durchgehende Fahrachse (20). Der vorstehend genannte Handlingroboter (18) kann dadurch die Bauteile (2,3) aus der Ladestation (4) entnehmen und direkt zu den verschiedenen typbezogenen Arbeitsstellen (11,12) der Respotstation (5) bringen und sie dort ablegen. Auf der gemeinsamen Fahrachse (20) kann am stromabwärtigen Ende ein zweiter Handlingroboter (18) angeordnet sein, der in der Respotstation (5) für ein Handling der Bauteile (2,3) und ferner für den Weitertransport in die nächstfolgende Bearbeitungsstation (6) sorgt.

In der Respotstation (5) sind z.B. vier Arbeitsstellen (11,12) auf beiden Seiten der gemeinsamen zentralen Fahrachse (20) angeordnet. Von den vier Arbeitsstellen (11,12) sind der Übersicht halber nur zwei in Betriebsstellung und mit Bauteilen (2,3) dargestellt. Alternativ kann die Zahl der Arbeitsstellen (11,12) noch oben oder unten variieren. Die Arbeitsstellen können auch nur an einer Seite der Fahrachse (20) angeordnet sein.

Die Bearbeitungsroboter (19) sind in der Respotstation (5) auf zwei weiteren Fahrachsen (21) angeordnet, die sich jeweils entlang der anderen rückwärtigen Seite der Arbeitsstellen (11,12) und parallel zur gemeinsamen Fahrachse (20) erstrecken. Ferner kann es in einer nicht dargestellten Variante quer oder in anderer Weise ausgerichtete weitere Fahrachsen geben, die zwischen den Arbeitsstellen (11,12) und/oder an deren Stirnenden angeordnet sind. Auf diesen ein oder mehreren zusätzlichen Fahrachsen (21) sind ein oder mehrere Bearbeitungsroboter (19) verfahrbar angeordnet.

Bei dieser Anordnung können die Handling- und Bearbeitungsroboter (18,19) räumlich voneinander getrennt werden, wobei z.B. auf der inneren Fahrachse (20) nur Handlingroboter (18) und auf der oder den äußeren oder seitlichen Fahrachse(n) (21) nur Bearbeitungsroboter (19) angeordnet sind. Bei einem Modellwechsel oder bei einer Erweiterung der Modellpalette braucht die laufende Produktion nicht gestoppt zu werden. Es werden lediglich ein oder mehrere Arbeitsstellen umgerüstet, während der Betrieb an den anderen Arbeitsstellen (11,12) unbelastet weiter läuft. Diese Anlagenkonfiguration kann auch bei anderen Stationen eingesetzt werden.

Bei der Lade- und Respotstation (4,5) bildet die gemeinsame Fahrachse (20) die Transferlinie (22), wobei am Ende der Respotstation (5) eine Übergabestelle (13) mit einem Linienversatz gebildet wird. An dieser Übergabestelle (13) ist eine dritte Bearbeitungsstation (6) angeordnet, die z.B. als Sealerstation ausgebildet ist, welche einen für alle Bauteiltypen (2,3) gemeinsamen Ablagetisch (16) aufweist, der zugleich die Zwischenablage (17) für die Bauteilübergabe und den Weitertransport bildet. Der am Ende der gemeinsamen Fahrachse (20) angeordnete Handlingroboter (18) legt die jeweils in der Respotstation (5) geschweißten Bauteile (2,3) auf den Ablagetisch (16), wobei anschließend von einem beispielsweise stationär angeordneten Bearbeitungsroboter (19) ein Sealer bzw. ein Dichtmittel oder ein anderes Material aufgetragen oder eine sonstige vorzugsweise typtolerante oder typneutrale Bauteilbearbeitung durchgeführt wird.

Die nachfolgende Bearbeitungsstation (7) ist wiederum als Schweißstation ausgebildet und dabei versetzt und getrennt von der Lade- und Respotstation (4,5) angeordnet. In der Schweißstation (7) gibt es zwei gemeinsame Fahrachsen (20), die beidseits entlang einer Reihe von Arbeitsstellen (11,12) angeordnet sind. Auf beiden gemeinsamen Fahrachsen (20) sind Handling- und Bearbeitungsroboter (18,19) nebeneinander verfahrbar angeordnet.

Wie die Übergabestelle (13) mit der Zwischenablage (17) zwischen den beiden Bearbeitungsstationen (5,7) verdeutlicht, sind auf der gemeinsamen Fahrachse (20) dieser benachbarten Stationen (5,7) an den Enden jeweils ein Handlingroboter (18) angeordnet, dessen Arbeitsbereich die Zwischenablage (17) überdeckt. Die Handlingroboter (18) sorgen auf diese Weise für den Bauteiltransport an der Übergabestelle (13) unter Überbrückung des Linienversatzes.

An der Schweißstation (7) kann ferner eine manuell von einem Werker (24) bediente Ladestelle (14) vorhanden sein, an der weitere Kleinteile oder dgl. zugeführt und an den Bauteilen (2,3) gefügt werden. Der auf der oberen gemeinsamen Fahrachse (20) angeordnete einzelne Handlingroboter (18) übernimmt einerseits die Bauteile (2,3) von der Sealerstation (6) und transportiert sie zu den Arbeitsstellen (11,12) in der Schweißstation (7). Außerdem transportiert dieser Handlingroboter (18) die zusätzlichen Teile von der Ladestelle (14) zu den Bauteilen (2,3) auf den Arbeitsstellen (11, 12). Die auf den zwei gemeinsamen Fahrachsen (20) angeordneten insgesamt drei Schweißroboter (19) führen die erforderlichen Füge- und Schweißarbeiten an den Bauteilen (2,3) durch und können hierzu alle Arbeitsstellen (11,12) erreichen. Auf der zweiten unteren gemeinsamen Fahrachse (20) ist am stromabwärtigen Ende wiederum ein einzelner Handlingroboter (18) verfahrbar angeordnet, der nach dem Schweißen die Bauteile (2,3) entnimmt und zur Übergabestellen (13) für den Weitertransport bringt.

An die Schweißstation (7) schließt sich ein Pufferspeicher (15) an, der z.B. als um vertikale Achsen umlaufender Bandspeicher ausgebildet ist. Er wird von dem vorerwähnten Handlingroboter (18) auf der unteren Fahrachse (20) bedient.

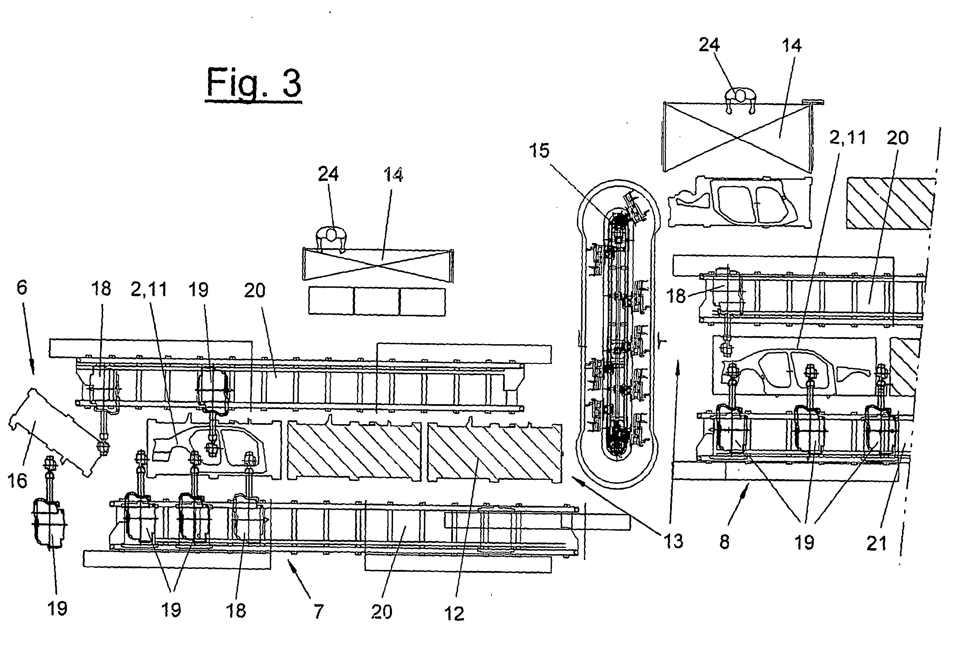

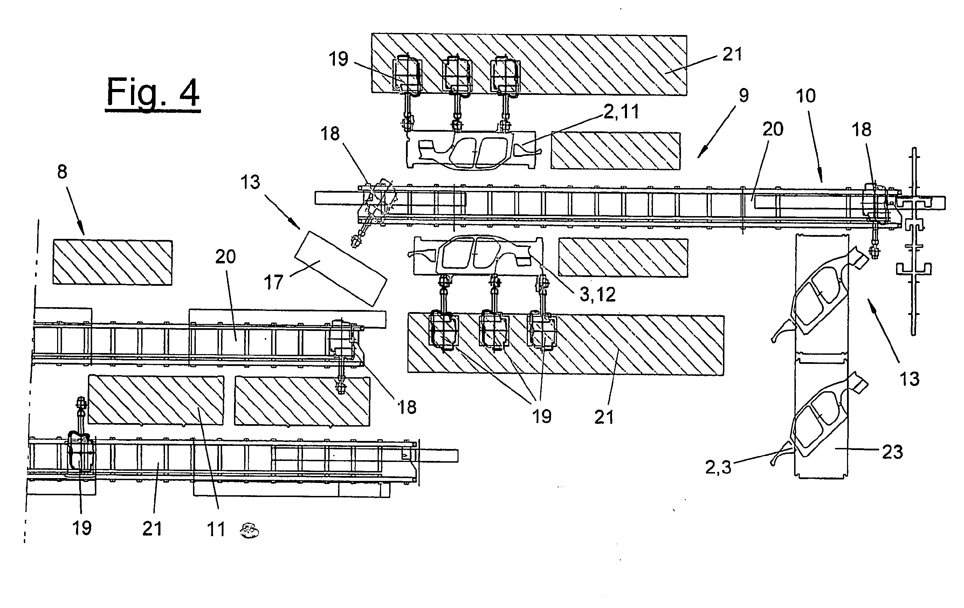

An den Pufferspeicher (15) schließt eine weitere Bearbeitungsstation (8) in Form einer Schweißstation an, die ähnlich wie die vorstehend beschriebene Schweißstation (7) ausgebildet ist. Auch hier sind zwei Fahrachsen (20,21) parallel und beidseits einer Reihe von Arbeitsstellen (11,12) angeordnet. Figur 3 und 4 zeigen diese Stationsausbildung mit einer Schnittlinie quer durch die Station. Auf der oberen Fahrachse (20) sind in diesem Fall zwei unabhängig voneinander arbeitende Handlingroboter (18) angeordnet, die zugleich auch eine manuelle Ladestelle (14) bedienen, an der ein Werker (24) weitere Teile an den Bauteilen (2,3) einlegt. Der stromaufwärtsseitige Handlingroboter (18) übernimmt außerdem die Bauteile (2,3) vom Pufferspeicher (15). Der stromabwärtige Handlingroboter (18) sorgt für den Weitertransport zu einer Zwischenablage (17), welche die nächste Übergabestelle (13) bildet. Auf der unteren Fahrachse (21) sind in diesem Fall drei Schweißroboter (19) in der Schweißstation (7) unabhängig voneinander verfahrbar angeordnet.

Die anschließende Bearbeitungsstation (9) ist eine weitere Schweißstation, in der die Arbeitsstellen (11,12) beidseits einer zentralen Fahrachse (20) angeordnet sind, auf der zwei Handlingroboter (18) unabhängig voneinander verfahrbar sind. Die Schweißroboter (19) sind auf zwei weiteren Fahrachsen (21) in jeweils dreifacher Anordnung positioniert, welche sich entlang der Rückseiten der Arbeitsstellen (11,12) erstrecken. Der stromabwärtige Handlingroboter (18) übernimmt nach Beendigung der Schweißarbeiten die Bauteile (2,3) aus der Schweißstation (9) und transportiert sie zu einer Entladestation (10), in der die Übergabe an einen Bauteilförderer (23) stattfindet, mit dem die Bauteile (2,3) abtransportiert werden.

Abwandlungen der gezeigten Ausführungsform sind in verschiedener Weise möglich. So kann die Zahl, Anordnung und Ausbildung der einzelnen Bearbeitungsstationen beliebig variieren. Gleiches gilt für die Zahl und Anordnung der Fahrachsen (20,21) und der Roboter (18,19). Die Art der Bearbeitungsvorgänge und die Ausbildung der Übergabe- oder Schnittstellen ist ebenfalls beliebig wählbar.

### BEZUGSZEICHENLISTE

- 1: Fertigungsanlage
- 2: Bauteil, Karosserieteil, Typ 1
- 3: Bauteil, Karosserieteil, Typ 2
- 4: Bearbeitungsstation, Ladestation
- 5: Bearbeitungsstation, Respotstation
- 6: Bearbeitungsstation, Sealerstation
- 7: Bearbeitungsstation, Schweißstation
- 8: Bearbeitungsstation, Schweißstation
- 9: Bearbeitungsstation, Schweißstation
- 10: Bearbeitungsstation, Entladestation
- 11: Arbeitsstelle
- 12: Arbeitsstelle
- 13: Übergabestelle
- 14: Ladestelle
- 15: Pufferspeicher
- 16: Ablagetisch
- 17: Zwischenablage
- 18: Roboter, Handlingroboter
- 19: Roboter, Bearbeitungsroboter, Schweißroboter
- 20: gemeinsame Fahrachse, Fahrschiene, 7. Roboterachse
- 21: Fahrachse, Fahrschiene, 7. Roboterachse
- 22: Transferlinie
- 23: Bauteilförderer
- 24: Werker

## Patentansprüche

1. Fertigungsanlage für Bauteile (2,3), insbesondere Karosseriebauteile, bestehend aus mehreren hintereinander entlang einer Transferlinie (22) angeordneten Bearbeitungsstationen (4 bis 10) und mehreren,mehrachsigen Robotern (18,19), wobei in mindestens einer Bearbeitungsstation (4 bis 10) ein oder mehrere Handlingroboter (18) für den Bauteiltransport auf mindestens einer Fahrachse (20,21) angeordnet sind, welche sich durch mehrere benachbarte Bearbeitungsstationen (4 bis 10) erstreckt und diese verbindet, wobei mindestens eine der Bearbeitungsstationen (4 bis 10) mehrere typbezogene Arbeitsstellen (11,12) für unterschiedliche Typen von gleichartigen Bauteilen (2,3) und ein oder mehrere weitere Fahrachsen (21) für ein oder mehrere Roboter (18, 19) aufweist, wobei die weitere Fahrachse (21) an der anderen Seite der Arbeitsstellen (11,12) angeordnet ist und die typbezogenen Arbeitsstellen (11,12) nebeneinander entlang der Fahrachsen (20,21) angeordnet und von den Robotern (18,19) bedienbar sind.

2. Fertigungsanlage nach Anspruch 1, **dadurch gekennzeichnet, dass** ein oder mehrere Handlingroboter (18) und ein oder mehrere Bearbeitungsroboter (19) nebeneinander auf ein oder mehreren gemeinsamen Fahrachsen (20) beweglich angeordnet sind.

3. Fertigungsanlage nach Anspruch 1 oder 2, **dadurch gekennzeichnet, dass** die Arbeitsstellen (11,12) beidseits einer gemeinsamen Fahrachse (20) angeordnet sind.

4. Fertigungsanlage nach Anspruch 1, 2 oder 3, **dadurch gekennzeichnet, dass** die Arbeitsstellen (11,12) von den Handlingrobotern (18) und den Bearbeitungsrobotern (19) gemeinsam bedienbar sind.

5. Fertigungsanlage nach einem der vorhergehenden Ansprüche, **dadurch gekennzeichnet, dass** zwischen den Bearbeitungsstationen (4 bis 10) Übergabestellen (13) mit Zwischenablagen (17) angeordnet sind, die im Arbeitsbereich der Handlingroboter (18) legen.

6. Fertigungsanlage nach einem der vorhergehenden Ansprüche, **dadurch gekennzeichnet, dass** auf der gemeinsamen Fahrachse (20) benachbarter Bearbeitungsstationen (4 bis 10) an den Enden jeweils ein Handlingroboter (18) angeordnet ist.

7. Fertigungsanlage nach einem der vorhergehenden Ansprüche, **dadurch gekennzeichnet, dass** auf der gemeinsamen Fahrachse (20) zwischen den endseitigen Handlingrobotern (18) ein oder mehrere Bearbeitungsroboter (19) angeordnet sind.

8. Fertigungsanlage nach einem der vorhergehenden Ansprüche, **dadurch gekennzeichnet, dass** die Roboter (18,19) als mehrachsige Gelenkarmroboter ausgebildet sind.

9. Fertigungsanlage nach einem der vorhergehenden Ansprüche, **dadurch gekennzeichnet, dass** die Roboter eine Doppelfunktion als Handling- und Bearbeitungsroboter haben.

## Claims

1. Manufacturing plant for parts (2, 3), particularly vehicle body parts, comprising a plurality of machining stations (4 to 10) arranged one behind another along a transfer line (22), and a plurality of multi-axial robots (18, 19), in at least one machining station (4 to 10) one or more handling robots (18) for the transportation of parts being arranged on at least one moving axle (20, 21) which extends through a plurality of adjacent machining stations (4 to 10) and connects them, at least one of the machining stations (4 to 10) having a plurality of type-related working points (11, 12) for different types of similar parts (2, 3) and having one or more further moving axles (21) for one or more robots (18, 19), the further moving axle (21) being arranged on the other side of the working points (11, 12) and the type-related working points (11, 12) being arranged next to each other along the moving axles (20, 21) and being operable by the robots (18, 19) .

2. Manufacturing plant according to Claim 1, **characterized in that** one or more handling robots (18) and one or more machining robots (19) are arranged movably next to each other on one or more common moving axles (20).

3. Manufacturing plant according to Claim 1 or 2, **characterized in that** the working points (11, 12) are arranged on both sides of a common moving axle (20).

4. Manufacturing plant according to Claim 1, 2 or 3, **characterized in that** the working points (11, 12) are operable jointly by the handling robots (18) and the machining robots (19).

5. Manufacturing plant according to one of the preceding claims, **characterized in that** transfer points (13) with intermediate stores (17) situated in the working region of the handling robots (18) are arranged between the machining stations (4 to 10).

6. Manufacturing plant according to one of the preceding claims, **characterized in that** a respective handling robot (18) is arranged at the ends on the common moving axle (20) of adjacent machining stations (4 to 10).

7. Manufacturing plant according to one of the preceding claims, **characterized in that** one or more machining robots (19) are arranged on the common moving axle (20) between the handling robots (18) on the end side.

8. Manufacturing plant according to one of the preceding claims, **characterized in that** the robots (18, 19) are designed as multi-axial articulated-arm robots.

9. Manufacturing plant according to one of the preceding claims, **characterized in that** the robots have a dual function as handling and machining robots.

## Revendications

1. Installation de fabrication d'éléments (2,3) notamment d'éléments de carrosserie, constituée de plusieurs postes (4 à 10) d'usinage disposés les uns derrière les autres le long d'une ligne (22) de transfert et de plusieurs robots (18,19) à plusieurs axes, un ou plusieurs robots (18) de manipulation pour le transport d'éléments étant disposés dans au moins un poste (4 à 10) d'usinage sur au moins un axe (20,21) de déplacement qui passe dans plusieurs postes (4 à 10) voisins d'usinage et les relie, au moins l'un des postes (4 à 10) d'usinage ayant plusieurs points (11,12) de travail relatif à un type pour des types différents d'éléments de même sorte et un ou plusieurs autres axes (21) de déplacement d'un ou de plusieurs robots (18,19), l'autre axe (21) de déplacement étant disposé de l'autre côté des points (11,12) de travail et les points (11,12) de travail relatifs à un type étant disposés les uns à côté des autres le long des axes (20,21) de déplacement et pouvant être desservis par les robots (18,19).

2. Installation de fabrication suivant la revendication 1, **caractérisée en ce qu'**un ou plusieurs robots (18) de manipulation et un ou plusieurs robots (19) d'usinage sont montés mobiles l'un à côté de l'autre sur un ou sur plusieurs axes (20) communs de déplacement.

3. Installation de fabrication suivant la revendication 1 ou 2, **caractérisée en ce que** les points (11,12) de travail sont disposés des deux côtés d'un axe (20) commun de déplacement.

4. Installation de fabrication suivant la revendication 1, 2 ou 3, **caractérisée en ce que** les points (11, 12) de travail peuvent être desservis conjointement par les robots (18) de traitement et par les robots (19) d'usinage.

5. Installation de fabrication suivant l'une des revendications précédentes, **caractérisée en ce qu'**il est disposé entre les postes (4 à 10) d'usinage des points (13) de transfert, avec dépôts (17) intermédiaires qui se trouvent dans la zone de travail des robots (18) de manipulation.

6. Installation de fabrication suivant l'une des revendications précédentes, **caractérisée en ce que** sur l'axe (20) commun de déplacement de poste 4 à 10 voisins d'usinage est monté respectivement aux extrémités un robot (18) de manipulation.

7. Installation de fabrication suivant l'une des revendications précédentes, **caractérisée en ce que** sur l'axe (20) commun de déplacement un ou plusieurs robots (19) d'usinage sont montés entre les robots (18) d'extrémité de manipulation.

8. Installation de fabrication suivant l'une des revendications précédentes, **caractérisée en ce que** les robots (18,19) sont constitués sous la forme d'un robot à bras articulé à plusieurs axes.

9. Installation de fabrication suivant l'une des revendications précédentes, **caractérisée en ce que** les robots ont une fonction double de robot de manipulation et de robot d'usinage.
